# EUROPEAN PATENT APPLICATION

(11) **EP 4 339 819 A1**
(43) Date of publication of application: **20.03.2024**
(21) Application number: 22868767.9
(22) Date of filing: 20.06.2022
(51) Int. Cl.: G06F 21/60

(54) **MODEL PROTECTION METHOD AND APPARATUS**

(30) Priority: 16.09.2021 CN 202111086393
(71) Applicant: Huawei Technologies Co., Ltd., Shenzhen, Guangdong 518129 (CN)
(72) Inventor: HE, Jian, Shenzhen, Guangdong 518129 (CN)
(74) Representative: Epping - Hermann - Fischer
(86) International application number: PCT/CN2022/099851
(87) International publication number: WO 2023/040390

(57) **Abstract**

This application relates to a model protection method and apparatus. The method includes: obtaining a plurality of execution operators from a first model, where the plurality of execution operators include a first operator, and the first operator indicates decryption processing logic; and sequentially executing the plurality of execution operators based on a hierarchical relationship between the plurality of execution operators includes: when executing the first operator, decrypting, based on the decryption processing logic, first data of the first operator to obtain second data, and executing, based on the second data, one or more execution operators arranged after the first operator. The model protection method and apparatus provided in embodiments of this application can implement model protection without adding an additional component.

## Description

This application claims priority to Chinese Patent Application No. 202111086393.9, filed with the China National Intellectual Property Administration on September 16, 2021 and entitled "MODEL PROTECTION METHOD AND APPARATUS", which is incorporated herein by reference in its entirety.

### TECHNICAL FIELD

This application relates to the field of artificial intelligence, and in particular, to a model protection method and apparatus.

### BACKGROUND

A rise of artificial intelligence (Artificial Intelligence, AI) technologies is accelerating, which mainly relies on three key factors: 1. breakthroughs made by a deep neural network (Deep Neural Network, DNN) in a plurality of classic machine learning tasks; 2. maturity of big data processing technologies and accumulation of massive data; and 3. significant improvement of hardware computing performance. Driven by the three factors, the AI technologies have been successfully applied to scenarios such as autonomous driving, image recognition, and speech recognition, and intelligence transformation of conventional industries is accelerated.

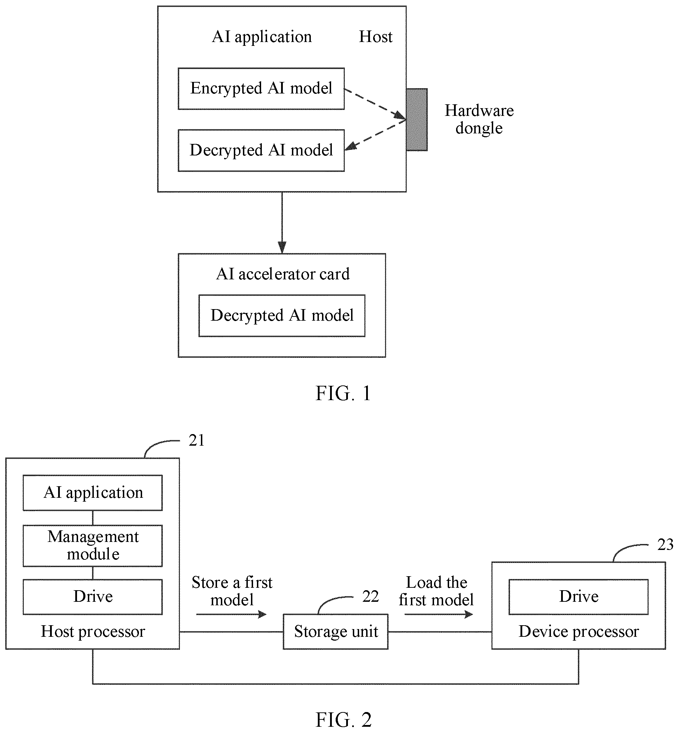

Currently, most machine learning tasks in a real world are resource-intensive, and model training or prediction needs to be completed by relying on a large quantity of computing resources and storage resources. A machine learning service provider provides a training platform and query interfaces for which models are used. A user may query for some instances through the interfaces. However, the AI technologies face a severe data leakage risk while developing rapidly. A parameter of an AI model needs to be protected. Otherwise, a model owner will suffer a huge economic loss. FIG. 1 is a schematic diagram of a model protection method in a related technology. As shown in FIG. 1, when providing an AI application for the user, the model owner also provides a hardware dongle. When the user runs the AI application on a host, the AI application first obtains an encrypted AI model (which may be stored in a form of a file), and reads a key and authorization information from the hardware dongle. After authentication performed based on the authorization information succeeds, the AI application may decrypt, by using the key, the encrypted AI model to obtain a decrypted AI model, and store the decrypted AI model in a memory. Then, an AI accelerator card loads the decrypted AI model from the memory to perform inference or incremental model training. In the foregoing method, the hardware dongle is deployed on the host. This increases costs and deployment complexity. How to implement model protection and reduce system costs without adding an additional component becomes an urgent problem to be resolved.

### SUMMARY

In view of this, a model protection method and apparatus are proposed, to implement model protection without adding an additional component.

According to a first aspect, an embodiment of this application provides a model protection method. The method includes: obtaining a plurality of execution operators from a first model, where the plurality of execution operators include a first operator, and the first operator indicates decryption processing logic; and sequentially executing the plurality of execution operators based on a hierarchical relationship between the plurality of execution operators includes: when executing the first operator, decrypting, based on the decryption processing logic, first data of the first operator to obtain second data, and executing, based on the second data, one or more execution operators arranged after the first operator.

In this embodiment of this application, data decryption is implemented in a software-only manner. In other words, model protection is implemented without adding an additional component. This reduces hardware costs, and lowers requirements on a scale of a running environment and an algorithm.

According to the first aspect, in a first possible implementation of the method, the second data is: at least one weighted value; at least one execution operator; or at least one weighted value and at least one execution operator.

In this embodiment of this application, a parameter that is of a model and that needs to be protected may be flexibly selected, to improve flexibility and user friendliness.

According to the first aspect or the first possible implementation of the first aspect, in a second possible implementation of the method, the decrypting, based on the decryption processing logic, first data to obtain second data includes: in response to a key returned based on a key obtaining request, decrypting, by using the key, the first data to obtain the second data.

In this embodiment of this application, the key is obtained in an interaction manner, to implement model protection.

According to the first aspect or the first possible implementation of the first aspect, in a third possible implementation of the method, the first operator indicates an address of storage space in which the first data is located, and the when executing the first operator, decrypting, based on the decryption processing logic, first data of the first operator to obtain second data includes: when the execution progresses to the address, decrypting, based on the decryption processing logic, the data stored in the address, to obtain the second data.

In this embodiment of this application, the stored data is directly decrypted, to improve efficiency. According to any one of the first aspect or the possible implementations of the first aspect, in a fourth possible implementation of the method, the method further includes: when completing the execution of the plurality of execution operators, deleting the first model, the plurality of execution operators, and the second data.

In this way, storage space can be saved, and model security can be improved.

According to any one of the first aspect or the first possible implementation to the third possible implementation of the first aspect, in a fifth possible implementation of the method, the first model is a training model or an inference model.

According to the fifth possible implementation of the first aspect, in a sixth possible implementation of the method, the method further includes: when the first model is the inference model, returning an inference result; or when the first model is the training model, returning a trained model.

According to any one of the first aspect or the possible implementations of the first aspect, in a seventh possible implementation of the method, the decryption processing logic is symmetric decryption processing logic or asymmetric decryption processing logic.

In this way, a user may select appropriate decryption processing logic based on an actual requirement, to improve flexibility and user friendliness, implement personalized customization, and further improve model security.

According to a second aspect, an embodiment of this application provides a model protection method, including: encrypting a first area in a second model; adding, based on the first area, a first operator to a computational graph of the second model to obtain a first model, where the first operator indicates decryption processing logic; and sending the first model.

In this embodiment of this application, the first operator that indicates the decryption processing logic is added based on the encrypted first area, so that model protection can be implemented and a normal operation function of a model can be ensured without adding an additional component. According to the second aspect, in a first possible implementation of the method, data in the first area is: at least one weighted value; at least one execution operator; or at least one weighted value and at least one execution operator.

According to the second aspect or the first possible implementation of the second aspect, in a second possible implementation of the method, the method further includes: in response to a key obtaining request from a device processor, performing authentication on the device processor; and when the authentication succeeds, returning a key to the device processor.

According to the second possible implementation of the second aspect, in a third possible implementation of the method, the key obtaining request includes an identifier of the first model and an identifier of the device processor, and the performing authentication on the device processor includes: performing authentication on the device processor based on the identifier of the first model and the identifier of the device processor.

According to any one of the second aspect or the possible implementations of the second aspect, in a fourth possible implementation of the method, the encrypting a first area in a second model includes: encrypting the first area by using a second operator, where the second operator indicates encryption processing logic.

According to a third aspect, an embodiment of this application provides a model protection apparatus, including: an obtaining module, configured to obtain a plurality of execution operators from a first model, where the plurality of execution operators include a first operator, and the first operator indicates decryption processing logic; and an execution module, configured to sequentially execute, based on a hierarchical relationship between the plurality of execution operators, the plurality of execution operators obtained by the obtaining module, where the execution module is specifically configured to: when executing the first operator, decrypt, based on the decryption processing logic, first data of the first operator to obtain second data, and execute, based on the second data, one or more execution operators arranged after the first operator.

In a possible implementation, the second data is:
at least one weighted value;
at least one execution operator; or
at least one weighted value and at least one execution operator.

In a possible implementation, the execution module is further configured to:
in response to a key returned based on a key obtaining request, decrypt, by using the key, the first data to obtain the second data.

In a possible implementation, the first operator indicates an address of storage space in which the first data is located; and when executing the first operator, the execution module is further configured to:
when the execution progresses to the address, decrypt, based on the decryption processing logic, the data stored in the address, to obtain the second data.

In a possible implementation, the apparatus further includes:
a deletion module, configured to: when the execution of the plurality of execution operators is completed, delete the first model, the plurality of execution operators, and the second data.

In a possible implementation, the first model is a training model or an inference model.

In a possible implementation, the apparatus further includes:
a returning module, configured to: when the first model is the inference model, return an inference result; and when the first model is the training model, return a trained model.

In a possible implementation, the decryption processing logic is symmetric decryption processing logic or asymmetric decryption processing logic.

According to a fourth aspect, an embodiment of this application provides a model protection apparatus, including:
an encryption module, configured to encrypt a first area in a second model;
an adding module, configured to add, based on the first area encrypted by the encryption module, a first operator to a computational graph of the second model to obtain a first model, where the first operator indicates decryption processing logic; and
a sending module, configured to send the first model obtained by adding the first operator by the adding module.

In a possible implementation, data in the first area is:
at least one weighted value;
at least one execution operator; or
at least one weighted value and at least one execution operator.

In a possible implementation, the apparatus further includes:
an authentication module, configured to: in response to a key obtaining request from a device processor, perform authentication on the device processor; and
when the authentication succeeds, return a key to the device processor.

In a possible implementation, the key obtaining request includes an identifier of the first model and an identifier of the device processor, and the authentication module is further configured to:
perform authentication on the device processor based on the identifier of the first model and the identifier of the device processor.

In a possible implementation, the encryption module is further configured to:
encrypt the first area by using a second operator, where the second operator indicates encryption processing logic.

According to a fifth aspect, an embodiment of this application provides an electronic device. The terminal device may perform the model protection method according to the first aspect or one or more of a plurality of possible implementations of the first aspect, or perform the model protection method according to the second aspect or one or more of a plurality of possible implementations of the second aspect.

According to a sixth aspect, an embodiment of this application provides a processor. The processor may perform the model protection method according to the first aspect or one or more of a plurality of possible implementations of the first aspect, or perform the model protection method according to the second aspect or one or more of a plurality of possible implementations of the second aspect. According to a seventh aspect, an embodiment of this application provides a chip. The chip may perform the model protection method according to the first aspect or one or more of a plurality of possible implementations of the first aspect, or perform the model protection method according to the second aspect or one or more of a plurality of possible implementations of the second aspect. According to an eighth aspect, an embodiment of this application provides a model protection system. The system includes a host processor, a storage unit, and a device processor, where the host processor is configured to: encrypt a first area in a second model; add, based on the first area, a first operator to a computational graph of the second model to obtain a first model, where the first operator indicates decryption processing logic; and send the first model; the storage unit is configured to store the first model; and the device processor is configured to obtain a plurality of execution operators from the first model, where the plurality of execution operators include the first operator, and the first operator indicates the decryption processing logic; and sequentially executing the plurality of execution operators based on a hierarchical relationship between the plurality of execution operators includes: when executing the first operator, decrypting, based on the decryption processing logic, first data of the first operator to obtain second data, and executing, based on the second data, one or more execution operators arranged after the first operator.

According to a ninth aspect, an embodiment of this application provides a readable storage medium. The readable storage medium stores computer program instructions. When the computer program instructions are executed by a processor, the model protection method according to the first aspect or one or more of a plurality of possible implementations of the first aspect is implemented, or the model protection method according to the second aspect or one or more of a plurality of possible implementations of the second aspect is implemented.

According to a tenth aspect, an embodiment of this application provides a computer program product, including computer-readable code or a non-volatile computer-readable storage medium carrying the computer-readable code. When the computer-readable code is run on an electronic device, a processor in the electronic device performs the model protection method according to the first aspect or one or more of a plurality of possible implementations of the first aspect, or performs the model protection method according to the second aspect or one or more of a plurality of possible implementations of the second aspect.

These aspects and other aspects of this application are more concise and more comprehensive in descriptions of the following (a plurality of) embodiments.

### BRIEF DESCRIPTION OF DRAWINGS

Accompanying drawings included in the specification and constructing a part of the specification and this specification jointly show the example embodiments, features, and aspects of this application, and are intended to explain the principles of this application.
FIG. 1 is a schematic diagram of a model protection method in a related technology;
FIG. 2 is a schematic diagram of an architecture of a model protection system according to an embodiment of this application;
FIG. 3 is an example schematic diagram of a computational graph;
FIG. 4 is a flowchart of a model protection method according to an embodiment of this application;
FIG. 5 is a flowchart of a model protection method according to an embodiment of this application;
FIG. 6 is a schematic diagram of interaction of a model protection method according to an embodiment of this application;
FIG. 7 is a schematic diagram of a structure of a model protection apparatus according to an embodiment of this application; and
FIG. 8 is a schematic diagram of a structure of a model protection apparatus according to an embodiment of this application.

### DESCRIPTION OF EMBODIMENTS

The following describes various example embodiments, features, and aspects of this application in detail with reference to the accompanying drawings. Identical reference signs in the accompanying drawings indicate elements that have same or similar functions. Although various aspects of embodiments are illustrated in the accompanying drawing, the accompanying drawings are not necessarily drawn in proportion unless otherwise specified.

The specific term "example" herein means "used as an example, embodiment, or illustration". Any embodiment described as "example" is not necessarily explained as being superior or better than other embodiments.

In addition, to better describe this application, numerous specific details are given in the following specific implementations. A person skilled in the art should understand that this application can also be implemented without some specific details. In some instances, methods, means, elements, and circuits that are well-known to a person skilled in the art are not described in detail, so that the subject matter of this application is highlighted.

Embodiments of this application provide a model protection method. Model protection is implemented in a software-only manner, no additional component is added, and requirements on a scale of a running environment and an algorithm are low, so that system costs are reduced. From a perspective of an application device, the model protection method provided in embodiments of this application may be applied to a model operation process in a device-edge-cloud scenario. The device refers to a client or a device, for example, a mobile phone or a computer. The edge refers to an edge device, for example, a router or a switch. The cloud refers to a cloud, for example, a server cluster. From a perspective of a function, the model protection method provided in embodiments of this application may be applied to a model inference scenario and an incremental model training scenario. An application scenario is not limited in embodiments of this application. FIG. 2 is a schematic diagram of an architecture of a model protection system according to an embodiment of this application. As shown in FIG. 2, the model protection system includes a host processor 21, a storage unit 22, and a device processor 23. The host processor 21 is a control center of a host (host), and is configured to run an AI application. The storage unit 22 may be configured to store data such as an AI model related to the AI application. The device processor 23 is a control center of a device (device), and is configured to process the AI model related to the AI application, for example, perform inference by using the AI model related to the AI application, or perform incremental training on the AI model related to the AI application. The AI model may be for object detection, image processing, signal control, and the like. A function of the AI model is not limited in this embodiment of this application. The AI model may be a convolutional neural network (Convolutional Neural Network, CNN) model, a recurrent neural network (Recurrent Neural Network, RNN) model, a deep neural network (Deep Neural Network, DNN) model, and the like. A type of the AI model is not limited in this embodiment of this application.

In a possible implementation, when the AI application is run, a management module of the host processor 21 may load and execute the AI model by invoking an interface provided by a graph executor (Graphy Engine, GE), and manage the storage unit 22, the device processor 23, and the like by invoking an interface provided by Runtime (Runtime), to complete a service by using an AI-model computing capability provided by the device processor 23.

In a possible implementation, the host processor 21 may be one processor, or may be a general term of a plurality of processing elements. For example, the host processor 21 may be a central processing unit (Central Processing Unit, CPU), or may be an application specific integrated circuit (Application Specific Integrated Circuit, ASIC), a field programmable gate array (Field Programmable Gate Array, FPGA), a graphics processing unit (Graphics Processing Unit, GPU), or one or more integrated circuits configured for embodiments of this disclosure, for example, one or more digital signal processors (Digital Signal Processors, DSPs) or one or more field programmable gate arrays (Field Programmable Gate Arrays, FPGAs). For the device processor 23, refer to the host processor 21. Details are not described herein again. It should be noted that the device processor 23 has a strong model operation capability.

In a possible implementation, the storage unit 22 may include a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In this embodiment of this application, the host processor 21 and the device processor 23 may be located in different devices. For example, the host processor 21 may be located in a host device such as an X86 server, an ARM server, or a Windows PC, and the device processor 23 may be installed in a hardware device that can be connected to the host device. In an example, the host processor 21 and the storage unit 22 are located in the host device, and the device processor 23 is located in the hardware device. The host processor 21 and the storage unit 22 may be connected through a bus, where the bus may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. A high-speed serial computer extended bus standard (Peripheral Component Interconnect express, PCIe) interface may be disposed on the host device, and the hardware device may be connected to the host device by using the PCIe interface. In a possible implementation, the host device and the hardware device may be integrated, and are collectively referred to as a host device. It should be noted that FIG. 2 is merely an example schematic diagram of an architecture of a model protection system according to embodiments of this application, and does not constitute a limitation on the model protection system. The model protection system may include more or fewer components than those shown in the figure, some components may be combined, or there may be a different component arrangement.

For ease of understanding, the following describes the AI model, a computational graph, a weighted value, and an execution operator in embodiments of this application.

The AI model refers to a structure obtained by fixing a neural network based on an algorithm. The AI model includes the computational graph and the weighted value. The computational graph is for representing an operation process of the algorithm, and is a method for formalizing the algorithm. The weighted value is for representing data that the execution operator needs to use in an execution process.

The computational graph includes a plurality of nodes. These nodes are connected through a directed edge, and each node represents one execution operator. An input edge of an entry node represents input data of an execution operator corresponding to the node, and an output edge of an exit node represents output data of an execution operator corresponding to the node. The operation process represented by using the computational graph may be a model inference process or a model training process.

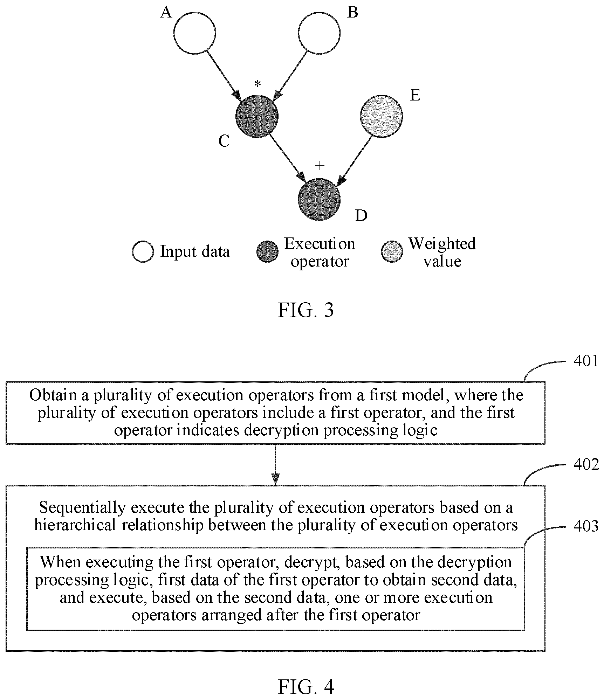

FIG. 3 is an example schematic diagram of a computational graph. As shown in FIG. 3, A and B are input data, C and D are execution operators, and E is a weighted value. C represents multiplication, D represents addition, and E represents a constant. The computational graph represents an operation process of outputting A*B+E. When the computational graph and the weighted value are stored as a model, the execution operators and the weighted value related to the execution operators may be stored based on a manner in which a directed edge is for connection in the computational graph, to store an AI model.

When the AI model is stored, the computational graph may be serialized, for storage, into a model file readable by a device processor (for example, the device processor 23 shown in FIG. 2), so that the device processor can run the model file to implement an operation. In an example, the model file readable by the device processor includes but is not limited to a MindIR format file, an AIR (Ascend Intermediate Representation) format file, an ONNX (Open Neural Network Exchange) format file, and the like. In other words, TensorFlow, PyTorch, or another AI framework on a host processor may store the computational graph and the weighted value of the AI model based on a data structure, to facilitate subsequent model inference or incremental model training on the device processor.

FIG. 4 is a flowchart of a model protection method according to an embodiment of this application. The method may be applied to the device processor 23 shown in FIG. 2. As shown in FIG. 4, the method may include the following steps.

Step S401: Obtain a plurality of execution operators from a first model, where the plurality of execution operators include a first operator, and the first operator indicates decryption processing logic.

The first model may represent an encrypted AI model. The first model may be a training model or an inference model. The first model may be for image classification, speech recognition, object detection, object tracking, or the like. A type and a function of the first model are not limited in this embodiment of this application. The first model includes a computational graph and a weighted value, and the computational graph of the first model includes the plurality of execution operators. In this embodiment of this application, after loading the first model, an application processor may decompress the first model layer by layer to obtain the plurality of execution operators.

The first operator may represent an execution operator that indicates the decryption processing logic. The plurality of execution operators of the first model may include one or more first operators. A quantity of the first operators is not limited in this embodiment of this application. After data is input into the first operator, the application processor may decrypt the input data based on the decryption processing logic indicated by the first operator, and then output a decrypted input. In this embodiment of this application, the data that needs to be input into the first operator for operation is referred to as first data of the first operator, and data that is output after an operation is performed by using the first operator is referred to as second data. It may be understood that the first data is data that needs to be decrypted, and the second data is decrypted data.

In this embodiment of this application, the second data may be at least one weighted value, at least one execution operator, or at least one weighted value and at least one execution operator. In other words, the first data may be at least one encrypted weighted value, at least one encrypted execution operator, or at least one encrypted weighted value and at least one encrypted execution operator. In an example, a weighted value M1 is input into the first operator for decryption to obtain a weighted value M2; an execution operator N1 is input into the first operator for decryption to obtain an execution operator N2; or a weighted value M1 and an execution operator N1 are input into the first operator for decryption to obtain a weighted value M2 and an execution operator N2. In a possible implementation, the decryption processing logic may be symmetric decryption processing logic or asymmetric decryption processing logic. For example, the symmetric decryption processing logic includes but is not limited to a DES TripleDES algorithm, a Blowfish algorithm, an RC algorithm, and the like, and the asymmetric decryption processing logic includes but is not limited to RSA, an ElGamal, a knapsack algorithm, a Rabin algorithm, an ECC algorithm, and the like. The decryption processing logic is not limited in this embodiment of this application. A user may flexibly select encryption and decryption algorithms to encrypt and decrypt data.

In this embodiment of this application, the first model may be provided by a host processor. In an example, as shown in FIG. 2, the host processor 21 may generate the first model in a process of running the AI application, and store the first model in the storage unit 22, and the device processor 23 may load the first model from the storage unit 22. In a possible implementation, transmission of the first model may be implemented through a memory copy. Specifically, the host processor 21 and the device processor 23 may separately apply for storage space in the storage unit 22. The host processor 21 stores the first model in storage space corresponding to the host processor 21, to store the first model. The device processor 23 copies data in the storage space in which the first model is located to storage space corresponding to the device processor 23, to load the first model. Step S402: Sequentially execute the plurality of execution operators based on a hierarchical relationship between the plurality of execution operators.

After obtaining the plurality of execution operators, a device processor may sequentially execute the execution operators based on the hierarchical relationship between the plurality of execution operators. Because the plurality of execution operators of the first model include the one or more first operators, when executing any one of the first operators, the device processor may perform step S403.

Step S403: When executing the first operator, decrypt, based on the decryption processing logic, the first data of the first operator to obtain the second data, and execute, based on the second data, one or more execution operators arranged after the first operator.

In the first model, the first data (including the encrypted execution operator and/or the encrypted weighted value) may be used as an input of the first operator. In this way, when executing the first operator, the device processor may decrypt, by using the decryption processing logic indicated by the first operator, the data input into the first operator, to obtain the second data (including the decrypted execution operator and/or the decrypted weighted value).

In an example, the weighted value E shown in FIG. 3 is an encrypted weighted value. If the device processor directly uses the weighted value E or performs incorrect decryption processing on the weighted value E, an output result is incorrect. In this example, the weighted value E is an input of the first operator, the first operator is arranged before the execution operator D, and the application processor needs to first execute the first operator and then execute the execution operator D. When executing the first operator, the application processor inputs the weighted value E into the first operator, outputs a decryption result of the weighted value E, and then executes the execution operator D, that is, adds a result of A*B and the decryption result of the weighted value E.

In another example, the execution operator C shown in FIG. 3 is an encrypted execution operator. If the device processor directly uses the execution operator C or performs incorrect decryption processing on the execution operator C, an output result is incorrect. In this example, the execution operator C is an input of the first operator, the first operator is arranged before the execution operator D, and the application processor needs to first execute the first operator and then execute the execution operator D. When executing the first operator, the application processor inputs the execution operator C into the first operator to obtain a decryption result, namely, an execution operator "*". The application processor multiplies the input data A and the input data B to obtain a result of A*B. Then, the execution operator D is executed. That is, the result of A*B and a decryption result of the weighted value E are added.

In still another example, the weighted value E shown in FIG. 3 is an encrypted weighted value, and the execution operator C is an encrypted execution operator. It is assumed that a first operator that uses the execution operator C as an input is denoted as a first operator 1, and a first operator that uses the weighted value E as an input is denoted as a first operator 2. In this example, the first operator 1 is arranged before the first operator 2, and the first operator 2 is arranged before the execution operator D. When executing the first operator 1, the application processor inputs the execution operator C into the first operator to obtain a decryption result, namely, an execution operator "*". The application processor multiplies the input data A and the input data B to obtain a result of A*B. Then, the application processor executes the first operator 2. In this case, the weighted value E is input into the first operator 2, and a decryption result of the weighted value E is output. Then, the application processor executes the execution operator D, that is, adds the result of A*B and the decryption result of the weighted value E.

It may be understood that, in this embodiment of this application, the first operator may be arranged in the first location of all execution operators of the first model, and the entire computational graph and all weighted values can be protected in this case; or the first operator is arranged in another location. In this embodiment of this application, in a process of generating the first model, the user may flexibly set a location of the first operator and the quantity of the first operators, and may further consecutively set the first operators (implementing multi- encryption), to improve data security.

In a possible implementation, the first operator may further indicate an address of storage space in which the first data is located. The when executing the first operator, decrypting, based on the decryption processing logic, the first data of the first operator to obtain the second data in step S403 may include: when the execution progresses to the address of the storage space in which the first data is located, decrypting, based on the decryption processing logic, the data stored in the address, to obtain the second data.

The computational graph and the weighted value that are obtained through decompression of the first model are stored in storage space (for example, the storage unit 22 shown in FIG. 2) in a form of a data sequence. The application processor reads data in the storage space, and executes the first operator when reading the data corresponding to the first operator. The first operator indicates the address of the first data. Therefore, when executing the first operator, the application processor first reads the first data in the address indicated by the first operator, and then decrypts, based on the decryption processing logic, the first data to obtain the second data.

In a possible implementation, the decrypting, based on the decryption processing logic, the first data to obtain the second data may include: in response to a key returned based on a key obtaining request, decrypting, by using the key, the first data to obtain the second data.

When executing the first operator, the device processor may send the key obtaining request to the host processor, to obtain the key to decrypt the first data. In response to the key obtaining request from the device processor, the host processor may perform authentication on the device processor, and return the key to the device processor when the authentication succeeds.

The key obtaining request is for obtaining the key. In an example, the key obtaining request may include an identifier of the first model and an identifier of the device processor. The host processor may obtain the identifier of the first model and the identifier of the device processor from the key obtaining request, and then perform authentication on the device processor based on the identifier of the first model and the identifier of the device processor. For example, the host processor may maintain an authority table, where the authority table may be for storing an association relationship between an identifier of a model, an identifier of a processor, and authority. The identifier of the model may be a name of the model, a number of the model, a type of the model, or the like. The identifier of the processor may be a name of the processor, a number of the processor, a version of the processor, or the like. The authority may be that there is decryption authority or there is no decryption authority. If the host processor finds, in the authority table, that authority associated with the identifier of the first model and the identifier of the device processor is that there is decryption authority, it is determined that the authentication succeeds, and the key is returned. If the host processor finds, in the authority table, no identifier of the first model, no identifier of the device processor, or that authority associated with the identifier of the first model and the identifier of the device processor is that there is no decryption authority, it is determined that the authentication fails, and the key is not returned. In this embodiment of this application, authentication may alternatively be performed in another manner, for example, based on a process number or an interface number. An authentication manner is not limited in this embodiment of this application.

In an example, key exchange between the device processor and the host processor may be implemented through an asynchronous API or a dedicated interface. This is not limited in this embodiment of this application.

In this embodiment of this application, in a process of sequentially executing the execution operators based on the hierarchical relationship between the plurality of execution operators of the first model, when the first operator of the first model is executed, the first data of the first operator is decrypted by using the decryption processing logic indicated by the first operator, and then the one or more execution operators arranged after the first operator are executed, to run the first model. In the foregoing process of executing the execution operators of the first model, data decryption is implemented in a software-only manner. In other words, model protection is implemented without adding an additional component. This reduces hardware costs, and lowers requirements on a scale of a running environment and an algorithm. In addition, the user may select appropriate decryption processing logic based on an actual requirement, to improve flexibility and user friendliness, implement personalized customization, and further improve model security.

In a possible implementation, the model protection method may further include: when completing the execution of the plurality of execution operators, deleting the first model, the plurality of execution operators, and the second data.

In this embodiment of this application, after the execution of the plurality of execution operators of the first model is completed, it indicates that an operation of the first model is completed. For example, inference that is based on the first model has been completed or incremental training on the first model has been completed. In this case, the first model and the execution operators and the second data that are generated in an operation process of the first model are deleted, so that the storage space can be saved. In addition, it is considered that the second data is the decrypted data, and leakage of the second data causes leakage of a model parameter. Therefore, after completing the execution of the plurality of execution operators of the first model, the device processor deletes the second data, so that model security can be further ensured.

In an example, when the first model is the inference model, the application processor may return an inference result. An AI application in the host processor may use the inference result in a running process.

In an example, when the first model is the training model, the application processor may return a trained model. An AI application in the host processor may use the trained model in a running process. It may be understood that the trained model returned by the application processor includes a computational graph and a weighted value of the trained model.

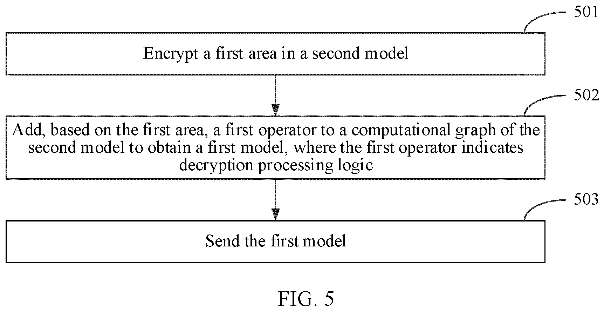

FIG. 5 is a flowchart of a model protection method according to an embodiment of this application. The method may be applied to the host processor 21 shown in FIG. 2. As shown in FIG. 5, the method may include the following steps.

Step S501: Encrypt a first area in a second model.

The second model represents a model that needs encryption protection. The first area may represent an area that needs to be encrypted and that is in the second model. In a possible implementation, data in the first area is at least one weighted value, at least one execution operator, or at least one weighted value and at least one execution operator. In this embodiment of this application, a user may flexibly select an area that needs to be encrypted, to improve flexibility and user friendliness. For example, the user may choose to encrypt key data and sensitive data, the user may choose to encrypt a key operator, or the user may encrypt an entire computational graph. The first area is not limited in this embodiment of this application.

In a possible implementation, step S501 may include: encrypting the first area by using a second operator, where the second operator indicates encryption processing logic. A host processor may choose to use the second operator to encrypt the first area by. It may be understood that, in this embodiment of this application, the encryption processing logic indicated by the second operator corresponds to decryption processing logic indicated by a first operator, and a used encryption algorithm and a used decryption algorithm are matched. Certainly, the host processor may alternatively select another manner, for example, a manual editing manner, to encrypt the first area. This is not limited in this embodiment of this application.

Step S502: Add, based on the first area, the first operator to the computational graph of the second model to obtain a first model, where the first operator indicates the decryption processing logic.

The first operator is added before the first area. In this way, before a device processor needs to use the data in the first area, the device processor first executes the first operator to decrypt the data in the first area. This not only protects security of the data in first data, but also ensures a normal operation function of the model.

Step S503: Send the first model.

In a possible implementation, the host processor may directly send the first model to the device processor for processing. In another possible implementation, the host processor may send the first model to a storage unit for storage, and then the device processor may load, for processing, the first model from the storage unit.

In this embodiment of this application, the first operator that indicates the decryption processing logic is added based on the encrypted first area, so that model protection can be implemented and the normal operation function of the model can be ensured without adding an additional component. In this embodiment of this application, the first operator may be inserted into any layer in the computational graph of the second model to obtain the first model. The user may further randomly encrypt a weighted value of one or more layers in the computational graph of the second model flexibly by using the first operator, to avoid leakage of core data.

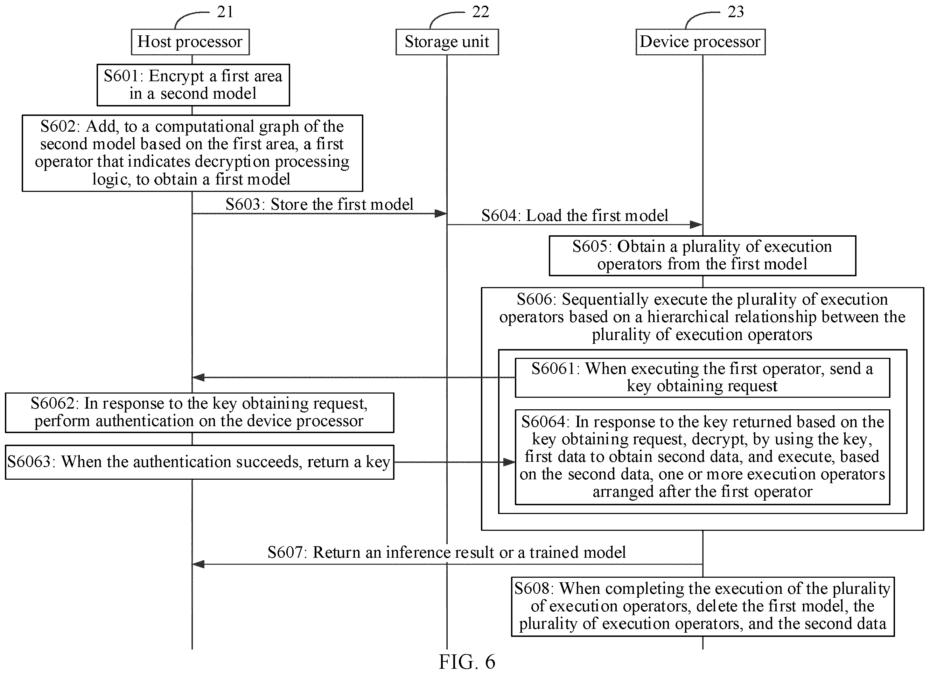

FIG. 6 is a schematic diagram of interaction of a model protection method according to an embodiment of this application. The method may be applied to the system shown in FIG. 2. As shown in FIG. 6, the method may include the following steps.

Step S601: A host processor encrypts a first area in a second model.

Step S602: The host processor adds, to a computational graph of the second model based on the first area, a first operator that indicates decryption processing logic, to obtain a first model.

Step S603: The host processor stores the first model in a storage unit.

Step S604: A device processor loads the first model from the storage unit.

Step S605: The device processor obtains a plurality of execution operators from the first model.

Step S606: The device processor sequentially executes the plurality of execution operators based on a hierarchical relationship between the plurality of execution operators.

Step S6061: When executing the first operator, the device processor sends a key obtaining request to the host processor.

Step S6062: In response to the key obtaining request from the device processor, the host processor performs authentication on the device processor.

In a possible implementation, the key obtaining request includes an identifier of the first model and an identifier of the device processor. Step S608 may include: The host processor performs authentication on the device processor based on the identifier of the first model and the identifier of the device processor.

Step S6063: When the authentication succeeds, the host processor returns a key to the device processor.

Step S6064: In response to the key returned based on the key obtaining request, the device processor decrypts, by using the key, first data to obtain second data, and executes, based on the second data, one or more execution operators arranged after the first operator.

Step S607: The device processor returns an inference result or a trained model.

Step S608: When completing the execution of the plurality of execution operators, the device processor deletes the first model, the plurality of execution operators, and the second data.

In this embodiment of this application, in a process of sequentially executing the execution operators based on the hierarchical relationship between the plurality of execution operators of the first model, when the first operator of the first model is executed, the first data of the first operator is decrypted by using the decryption processing logic indicated by the first operator, and then the one or more execution operators arranged after the first operator are executed, to run the first model. In the foregoing process of executing the execution operators of the first model, data decryption is implemented in a software-only manner. In other words, model protection is implemented without adding an additional component. This reduces hardware costs, and lowers requirements on a scale of a running environment and an algorithm. In addition, a user may select appropriate decryption processing logic based on an actual requirement, to improve flexibility and user friendliness, implement personalized customization, and further improve model security.

In this embodiment of this application, data decryption is all performed by the device processor, and it is difficult for an attacker to enter a device side to perform an attack, so that security is improved. Because all implementation logic of a development manner of the first operator is controlled by the user, the user may flexibly select encryption and decryption algorithms and a key exchange manner. For example, the user may encrypt data content in a symmetric encryption manner, and transfer a public key in keys based on a public-network environment in an asymmetric manner. The encryption and decryption algorithms are not limited in this embodiment of this application.

In this embodiment of this application, before the first operator is for decryption, a key protection area of the model needs to be temporarily stored in the storage unit (for example, a memory) and no parsing operation is performed. After the decryption is completed, dynamic parsing of the second data is supported.

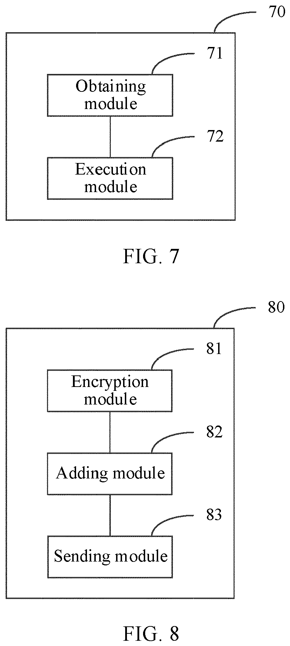

FIG. 7 is a schematic diagram of a structure of a model protection apparatus according to an embodiment of this application. The apparatus may be applied to the device processor 23 shown in FIG. 2. As shown in FIG. 7, the apparatus 70 may include:
an obtaining module 71, configured to obtain a plurality of execution operators from a first model, where the plurality of execution operators include a first operator, and the first operator indicates decryption processing logic; and
an execution module 72, configured to sequentially execute, based on a hierarchical relationship between the plurality of execution operators, the plurality of execution operators obtained by the obtaining module 71, where
the execution module 72 is specifically configured to:
   when executing the first operator, decrypt, based on the decryption processing logic, first data of the first operator to obtain second data, and execute, based on the second data, one or more execution operators arranged after the first operator.

In a possible implementation, the second data is:
at least one weighted value;
at least one execution operator; or
at least one weighted value and at least one execution operator.

In a possible implementation, the execution module is further configured to:
in response to a key returned based on a key obtaining request, decrypt, by using the key, the first data to obtain the second data.

In a possible implementation, the first operator indicates an address of storage space in which the first data is located; and when executing the first operator, the execution module is further configured to:
when the execution progresses to the address, decrypt, based on the decryption processing logic, the data stored in the address, to obtain the second data.

In a possible implementation, the apparatus further includes:
a deletion module, configured to: when the execution of the plurality of execution operators is completed, delete the first model, the plurality of execution operators, and the second data.

In a possible implementation, the first model is a training model or an inference model.

In a possible implementation, the apparatus further includes:
a returning module, configured to: when the first model is the inference model, return an inference result; and when the first model is the training model, return a trained model.

In a possible implementation, the decryption processing logic is symmetric decryption processing logic or asymmetric decryption processing logic.

In this embodiment of this application, in a process of sequentially executing the execution operators based on the hierarchical relationship between the plurality of execution operators of the first model, when the first operator of the first model is executed, the first data of the first operator is decrypted by using the decryption processing logic indicated by the first operator, and then the one or more execution operators arranged after the first operator are executed, to run the first model. In the foregoing process of executing the execution operators of the first model, data decryption is implemented in a software-only manner. In other words, model protection is implemented without adding an additional component. This reduces hardware costs, and lowers requirements on a scale of a running environment and an algorithm. In addition, a user may select appropriate decryption processing logic based on an actual requirement, to improve flexibility and user friendliness, implement personalized customization, and further improve model security.

FIG. 8 is a schematic diagram of a structure of a model protection apparatus according to an embodiment of this application. The apparatus may be applied to the host processor 21 shown in FIG. 2. As shown in FIG. 8, the apparatus 80 may include:
an encryption module 81, configured to encrypt a first area in a second model;
an adding module 82, configured to add, based on the first area encrypted by the encryption module 81, a first operator to a computational graph of the second model to obtain a first model, where the first operator indicates decryption processing logic; and
a sending module 83, configured to send the first model obtained by adding the first operator by the adding module 82.

In a possible implementation, data in the first area is:
at least one weighted value;
at least one execution operator; or
at least one weighted value and at least one execution operator.

In a possible implementation, the apparatus further includes:
an authentication module, configured to: in response to a key obtaining request from a device processor, perform authentication on the device processor; and
when the authentication succeeds, return a key to the device processor.

In a possible implementation, the key obtaining request includes an identifier of the first model and an identifier of the device processor, and the authentication module is further configured to:
perform authentication on the device processor based on the identifier of the first model and the identifier of the device processor.

In a possible implementation, the encryption module is further configured to:
encrypt the first area by using a second operator, where the second operator indicates encryption processing logic.

An embodiment of this application provides an electronic device, including a processor and a storage that is configured to store processor-executable instructions, where the processor is configured to implement the foregoing methods when executing the instructions.

An embodiment of this application provides a processor, and the processor is configured to perform the foregoing methods.

An embodiment of this application provides a chip, and the chip may perform the foregoing methods.

An embodiment of this application provides a model protection system. An architecture of the system is shown in FIG. 2. The system includes a host processor, a storage unit, and a device processor, where the host processor is configured to: encrypt a first area in a second model; add, based on the first area, a first operator to a computational graph of the second model to obtain a first model, where the first operator indicates decryption processing logic; and send the first model; the storage unit is configured to store the first model; and the device processor is configured to obtain a plurality of execution operators from the first model, where the plurality of execution operators include the first operator, and the first operator indicates the decryption processing logic; and sequentially executing the plurality of execution operators based on a hierarchical relationship between the plurality of execution operators includes: when executing the first operator, decrypting, based on the decryption processing logic, first data of the first operator to obtain second data, and executing, based on the second data, one or more execution operators arranged after the first operator.

An embodiment of this application provides a non-volatile computer-readable storage medium. The non-volatile computer-readable storage medium stores computer program instructions. When the computer program instructions are executed by a processor, the foregoing methods are implemented.

An embodiment of this application provides a computer program product, including computer-readable code or a non-volatile computer-readable storage medium carrying the computer-readable code. When the computer-readable code is run on a processor of an electronic device, the processor in the electronic device performs the foregoing methods.

The computer-readable storage medium may be a tangible device that can retain and store instructions used by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. More specific examples (a non-exhaustive list) of the computer-readable storage medium include: a portable computer diskette, a hard disk, a random access memory (Random Access Memory, RAM), a read-only memory (Read-Only Memory, ROM), an erasable programmable read-only memory (an Electrically Programmable Read-Only Memory, EPROM or a flash memory), a static random access memory (Static Random Access Memory, SRAM), a portable compact disc read-only memory (Compact Disc Read-Only Memory, CD-ROM), a digital versatile disc (Digital Video Disc, DVD), a memory stick, a floppy disk, a mechanically encoded device such as a punch-card or a raised structure in a groove that stores instructions, and any suitable combination of the foregoing.

The computer-readable program instructions or the code herein may be downloaded from the computer-readable storage medium to computing/processing devices or to an external computer or an external storage device through a network such as the Internet, a local area network, a wide area network, and/or a wireless network. The network may include a copper transmission cable, optical fiber transmission, wireless transmission, a router, a firewall, a switch, a gateway computer, and/or an edge server. A network adapter card or a network interface in each computing/processing device receives the computer-readable program instructions from the network and forwards the computer-readable program instructions for storage in a computer-readable storage medium in the computing/processing device.

The computer program instructions for performing operations in this application may be assembly instructions, instruction set architecture (Instruction Set Architecture, ISA) instructions, machine instructions, machine-related instructions, microcode, firmware instructions, status setting data, or source code or target code written in one programming language or any combination of a plurality of programming languages. The programming languages include an object-oriented programming language such as Smalltalk and C++, and a conventional procedural programming language such as a "C" language or a similar programming language. The computer-readable program instructions may be executed entirely on a user computer, partly on the user computer, as a stand-alone software package, partly on the user computer and partly on a remote computer, or entirely on the remote computer or a server. When the remote computer is involved, the remote computer may be connected to the user computer through any type of network, including a local area network (Local Area Network, LAN) or a wide area network (Wide Area Network, WAN), or may be connected to an external computer (for example, connected by using an Internet service provider through the Internet). In some embodiments, an electronic circuit, for example, a programmable logic circuit, a field-programmable gate array (Field-Programmable Gate Array, FPGA), or a programmable logic array (Programmable Logic Array, PLA), is customized by using status information of the computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

These computer-readable program instructions may be provided for a processor of a general-purpose computer, a special-purpose computer, or another programmable data processing apparatus to produce a machine, so that the instructions generate, when executed by the processor of the computer or the another programmable data processing apparatus, an apparatus for implementing functions/actions specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing the various aspects of the functions/actions specified in the one or more blocks in the flowcharts and/or the block diagrams.

The computer-readable program instructions may alternatively be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implement the functions/actions specified in the one or more blocks in the flowcharts and/or block diagrams. The flowcharts and the block diagrams in the accompanying drawings illustrate system architectures, functions, and operations of possible implementations of apparatuses, systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, the functions marked in the blocks may also occur in a sequence different from that marked in the accompanying drawings. For example, actually, two consecutive blocks may be executed substantially in parallel, and may sometimes be executed in a reverse order, depending on a function involved.

It should also be noted that each block in the block diagrams and/or the flowcharts and a combination of blocks in the block diagrams and/or the flowcharts may be implemented by hardware (for example, a circuit or an ASIC (Application Specific Integrated Circuit, application specific integrated circuit)) that performs a corresponding function or action, or may be implemented by a combination of hardware and software, for example, firmware.

Although the present invention is described with reference to embodiments herein, in a process of implementing the present invention that claims protection, a person skilled in the art may understand and implement another variation of the disclosed embodiments by viewing the accompanying drawings, the disclosed content, and the accompanying claims. In the claims, "comprising" (comprising) does not exclude another component or step, and "a" or "one" does not exclude a case of plurality. A single processor or another unit may implement several functions enumerated in the claims. Some measures are recorded in dependent claims that are different from each other, but this does not mean that the measures cannot be combined to produce a good effect. Embodiments of this application have been described above. The foregoing descriptions are examples, are not exhaustive, and are not limited to the disclosed embodiments. Many modifications and changes are apparent to a person of ordinary skill in the art without departing from the scope and spirit of embodiments. Selection of terms used in this specification is intended to best explain principles of embodiments, actual application, or improvements to technologies in the market, or to enable another person of ordinary skill in the art to understand embodiments disclosed in this specification.

## Claims

1. A model protection method, wherein the method comprises:
obtaining a plurality of execution operators from a first model, wherein the plurality of execution operators comprise a first operator, and the first operator indicates decryption processing logic; and
sequentially executing the plurality of execution operators based on a hierarchical relationship between the plurality of execution operators comprises:
when executing the first operator, decrypting, based on the decryption processing logic, first data corresponding to the first operator to obtain second data, and executing, based on the second data, one or more execution operators arranged after the first operator.

2. The method according to claim 1, wherein the second data is:
at least one weighted value;
at least one execution operator; or
at least one weighted value and at least one execution operator.

3. The method according to claim 1 or 2, wherein the decrypting, based on the decryption processing logic, first data to obtain second data comprises:
in response to a key returned based on a key obtaining request, decrypting, by using the key, the first data to obtain the second data.

4. The method according to claim 1 or 2, wherein the first operator indicates an address of storage space in which the first data is located, and the when executing the first operator, decrypting, based on the decryption processing logic, first data corresponding to the first operator to obtain second data comprises:
when the execution progresses to the address, decrypting, based on the decryption processing logic, the data stored in the address, to obtain the second data.

5. The method according to any one of claims 1 to 4, wherein the method further comprises:
when completing the execution of the plurality of execution operators, deleting the first model, the plurality of execution operators, and the second data.

6. The method according to any one of claims 1 to 4, wherein the first model is a training model or an inference model.

7. The method according to claim 6, wherein the method further comprises:
when the first model is the inference model, returning an inference result; or
when the first model is the training model, returning a trained model.

8. The method according to any one of claims 1 to 7, wherein the decryption processing logic is symmetric decryption processing logic or asymmetric decryption processing logic.

9. A model protection method, wherein the method comprises:
encrypting a first area in a second model;
adding, based on the first area, a first operator to a computational graph of the second model to obtain a first model, wherein the first operator indicates decryption processing logic; and
sending the first model.

10. The method according to claim 9, wherein data in the first area is:
at least one weighted value;
at least one execution operator; or
at least one weighted value and at least one execution operator.

11. The method according to claim 9 or 10, wherein the method further comprises:
in response to a key obtaining request from a device processor, performing authentication on the device processor; and
when the authentication succeeds, returning a key to the device processor.

12. The method according to claim 11, wherein the key obtaining request comprises an identifier of the first model and an identifier of the device processor, and the performing authentication on the device processor comprises:
performing authentication on the device processor based on the identifier of the first model and the identifier of the device processor.

13. The method according to any one of claims 9 to 12, wherein the encrypting a first area in a second model comprises:
encrypting the first area by using a second operator, wherein the second operator indicates encryption processing logic.

14. A model protection apparatus, wherein the apparatus comprises:
an obtaining module, configured to obtain a plurality of execution operators from a first model, wherein the plurality of execution operators comprise a first operator, and the first operator indicates decryption processing logic; and
an execution module, configured to sequentially execute, based on a hierarchical relationship between the plurality of execution operators, the plurality of execution operators obtained by the obtaining module, wherein
the execution module is specifically configured to:
when executing the first operator, decrypt, based on the decryption processing logic, first data corresponding to the first operator to obtain second data, and execute, based on the second data, one or more execution operators arranged after the first operator.

15. The apparatus according to claim 14, wherein the second data is:
at least one weighted value;
at least one execution operator; or
at least one weighted value and at least one execution operator.

16. The apparatus according to claim 14 or 15, wherein the execution module is further configured to:
in response to a key returned based on a key obtaining request, decrypt, by using the key, the first data to obtain the second data.

17. The apparatus according to claim 14 or 15, wherein the first operator indicates an address of storage space in which the first data is located; and when executing the first operator, the execution module is further configured to:
when the execution progresses to the address, decrypt, based on the decryption processing logic, the data stored in the address, to obtain the second data.

18. The apparatus according to any one of claims 14 to 17, wherein the apparatus further comprises:
a deletion module, configured to: when the execution of the plurality of execution operators is completed, delete the first model, the plurality of execution operators, and the second data.

19. The apparatus according to any one of claims 14 to 17, wherein the first model is a training model or an inference model.

20. The apparatus according to claim 19, wherein the apparatus further comprises:
a returning module, configured to: when the first model is the inference model, return an inference result; and when the first model is the training model, return a trained model.

21. The apparatus according to any one of claims 14 to 20, wherein the decryption processing logic is symmetric decryption processing logic or asymmetric decryption processing logic.

22. A model protection apparatus, wherein the apparatus comprises:
an encryption module, configured to encrypt a first area in a second model;
an adding module, configured to add, based on the first area encrypted by the encryption module, a first operator to a computational graph of the second model to obtain a first model, wherein the first operator indicates decryption processing logic; and
a sending module, configured to send the first model obtained by adding the first operator by the adding module.

23. The apparatus according to claim 22, wherein data in the first area is:
at least one weighted value;
at least one execution operator; or
at least one weighted value and at least one execution operator.

24. The apparatus according to claim 22 or 23, wherein the apparatus further comprises:
an authentication module, configured to: in response to a key obtaining request from a device processor, perform authentication on the device processor; and
when the authentication succeeds, return a key to the device processor.

25. The apparatus according to claim 24, wherein the key obtaining request comprises an identifier of the first model and an identifier of the device processor, and the authentication module is further configured to:
perform authentication on the device processor based on the identifier of the first model and the identifier of the device processor.

26. The apparatus according to any one of claims 22 to 25, wherein the encryption module is further configured to:
encrypt the first area by using a second operator, wherein the second operator indicates encryption processing logic.

27. An electronic device, comprising:
a processor; and
a storage configured to store processor-executable instructions, wherein
the processor is configured to implement the method according to any one of claims 1 to 8 or the method according to any one of claims 9 to 13 when executing the instructions.

28. A model protection system, wherein the system comprises a host processor, a storage unit, and a device processor, wherein
the host processor is configured to: encrypt a first area in a second model; add, based on the first area, a first operator to a computational graph of the second model to obtain a first model, wherein the first operator indicates decryption processing logic; and send the first model;
the storage unit is configured to store the first model; and
the device processor is configured to obtain a plurality of execution operators from the first model, wherein the plurality of execution operators comprise the first operator, and the first operator indicates the decryption processing logic; and sequentially executing the plurality of execution operators based on a hierarchical relationship between the plurality of execution operators comprises: when executing the first operator, decrypting, based on the decryption processing logic, first data corresponding to the first operator to obtain second data, and executing, based on the second data, one or more execution operators arranged after the first operator.

29. A computer-readable storage medium, storing computer program instructions, wherein when the computer program instructions are executed by a processor, the method according to any one of claims 1 to 8 or the method according to any one of claims 9 to 13 is implemented.

30. A computer program product, comprising computer-readable code or a computer-readable storage medium carrying the computer readable code, wherein when the computer-readable code is executed by a processor, the method according to any one of claims 1 to 8 or the method according to any one of claims 9 to 13 is implemented.
